# EUROPEAN PATENT SPECIFICATION

(11) **EP 3 115 701 B1**
(45) Date of publication and mention of the grant of the patent: **18.12.2019**
(21) Application number: 15758897.1
(22) Date of filing: 27.02.2015
(51) Int. Cl.: F24D 3/18, F24D 3/00, F24D 11/02, F25B 1/00, F25B 6/04, F28D 20/02, F24D 19/10

(54) **HEAT-PUMP HOT WATER GENERATOR**
HEISSWASSERERZEUGER MIT WÄRMEPUMPE
GÉNÉRATEUR D'EAU CHAUDE À POMPE À CHALEUR

(30) Priority: 04.03.2014 JP 2014041276
(43) Date of publication of application: 11.01.2017
(73) Proprietor: Panasonic Intellectual Property Management Co., Ltd., Osaka-shi, Osaka 540-6207 (JP)
(72) Inventor: NAKATANI, Kazuhito, Osaka-shi, Osaka 540-6207 (JP); AOYAMA, Shigeo, Osaka-shi, Osaka 540-6207 (JP)
(74) Representative: Eisenführ Speiser
(86) International application number: PCT/JP2015/001043
(87) International publication number: WO 2015/133107

(56) References cited:
- JP-A- 2009 216 264
- JP-A- 2010 019 477
- JP-A- 2012 007 796
- JP-A- 2012 007 796
- JP-A- 2013 036 648
- JP-A- 2013 119 954
- JP-B2- 3 523 772
- KR-A- 20120 130 358

## Description

### [TECHNICAL FIELD]

The present invention relates to a hot water generator capable of producing hot water by a heat pump.

### [BACKGROUND TECHNIQUE]

Conventionally, there is proposed a heat pump device in which a heat pump is provided with heat storage means and an amount of heat stored in the heat storage means is used (see patent document 1 for example).

In this heat pump device, a compressor, a four-way valve, an indoor heat exchanger, an expansion mechanism and an outdoor heat exchanger are annularly connected to one another in this order through refrigerant pipes, thereby configuring a refrigerant circuit. This heat pump device includes a first bypass passage having a first on-off valve, and a second bypass passage having a second on-off valve and the heat storage means. One end of the first bypass passage is connected to a discharge side of the compressor, and the other end is connected to a location between the expansion mechanism and the outdoor heat exchanger. The first bypass passage branches off from the refrigerant circuit between the indoor heat exchanger and the expansion mechanism, and is connected to a suction side of the compressor.

According to this heat pump device, when it is necessary to defrost the outdoor heat exchanger at the time of a heating operation, the first on-off valve and the second on-off valve are opened, and refrigerant is made to flow through the first bypass passage and the second bypass passage. According to this, a defrosting operation is carried out while keeping the heating operation.

From Patent Document 2 disclosing a heat-pump hot water generator according to the preamble of claim 1, a storage type hot water supplying and heating apparatus is known. The heating apparatus comprises a main heating return line for returning hot and cold water that radiated heat in a heating heat exchanger to a hot water storage tank without passing through the heating means. Moreover, the heating apparatus comprises auxiliary heating return lines for returning the hot and cold water through the heating means and selector valves selecting whether to return the hot and cold water after heat radiation through the main heating return line or through the auxiliary heating return lines. A control means switches the selector valves to the side of the main heating return line during heating operation and to the side of the auxiliary heating return lines when it is necessary to perform freezing preventive operation during heating operation, to circulate the hot and cold water after heat radiation to a heating means. The control means controls to return the selector valves to the side of the main heating return line after the lapse of a predetermined circulating time and changes the predetermined circulating time according to the rotating speed of a heating circulation pump.

### [PRIOR ART DOCUMENT]

### [PATENT DOCUMENT]

[PATENT DOCUMENT 1] Japanese Patent Publication No.3523772
[PATENT DOCUMENT 2] Japanese Patent Application 2010 019477

### [SUMMARY OF THE INVENTION]

### [PROBLEM TO BE SOLVED BY THE INVENTION]

In the above-described conventional configuration, however, the heat storage means is exclusively used for defrosting during the heating operation. Therefore, the heating operation cannot be carried out using the amount of heat stored in the heat storage means. For example, the heating operation cannot be carried out when the compressor is under suspension, and there is a problem that user's comfort is deteriorated.

The present invention has been accomplished to solve the conventional problem, and it is an object of the invention to provide a heat-pump hot water generator having excellent comfort and capable of producing a heating medium and using the same for a heating operation even if a compressor is under suspension.

### [MEANS FOR SOLVING THE PROBLEM]

To solve the conventional problem, the present invention provides a heat-pump hot water generator as defined in claim 1 including, amongst others: a refrigerant circuit formed by annularly connecting, to one another, a compressor, a radiator in which refrigerant and heating medium exchange heat, decompressing means and an evaporator through a refrigerant pipe; and a heating medium path through which the heating medium flows, wherein a main path having the radiator and an auxiliary path having heat storage means which exchanges heat with the heating medium are provided in the heating medium path in parallel.

According to this, even when the compressor is under suspension, the heating medium can be heated by the amount of heat stored in the heat storage means.

### [EFFECTS OF INVENTION]

According to the present invention, it is possible to provide a heat-pump hot water generator having excellent comfort.

### [BRIEF DESCRIPTION OF THE DRAWINGS]

Fig. 1 is a schematic block diagram of a heat-pump hot water generator according to an embodiment of the present invention;
Fig. 2 shows action of a heating operation of the heat-pump hot water generator;
Fig. 3 shows action of a heat storing operation of the heat-pump hot water generator;
Fig. 4 shows action of a heat storing heating operation of the heat-pump hot water generator;
Fig. 5 shows variation in an electricity consumed amount and room temperature when a heating operation is carried out by an intermittent operation of a compressor in the heat-pump hot water generator;
Fig. 6 shows variation in an electricity consumed amount and room temperature when a heat storing heating operation is carried out in the heat-pump hot water generator;
Fig. 7 shows action of a concurrently using operation of the heat-pump hot water generator; and
Fig. 8 shows action of a defrosting operation of the heat-pump hot water generator.

### [MODE FOR CARRYING OUT THE INVENTION]

A first aspect of the invention provides a heat-pump hot water generator as defined in claim 1 which, inter alia, includes : a refrigerant circuit formed by annularly connecting, to one another, a compressor, a radiator in which refrigerant and heating medium exchange heat, decompressing means and an evaporator through a refrigerant pipe; and a heating medium path through which the heating medium flows, wherein a main path having the radiator and an auxiliary path having heat storage means which exchanges heat with the heating medium are provided in the heating medium path in parallel, wherein the heat-pump hot water generator further includes a heat storing path which branches off from the refrigerant circuit placed in a discharge side of the compressor, and which is connected to the refrigerant circuit through a heat storage means, a solenoid valve which stops flow of the refrigerant to the heat storing path, a control means which executes a plurality of operation modes, wherein the plurality of operation modes include a defrosting operation mode, wherein, in the defrosting operation mode, the heating medium is heated by the heat storage means and the flow of the refrigerant to the heat storing path is stopped by the solenoid valve, whereby high temperature and high pressure refrigerant from the compressor is made to flow through the evaporator.

According to this, it is possible to carry out a method of heating the heating medium by the radiator to produce a high temperature heating medium, and a method of heating the heating medium by the heat storage means to produce a heating medium. Therefore, even when the carried out is under suspension, it is possible to produce a high temperature heating medium and to use the heating medium for heating a living-room and for a hot water supply operation. Thus, it is possible to highly maintain user's comfort.

It is preferable that a branch path between the main path and the auxiliary path is provided with flow rate control means for changing a flow rate of a heating medium which flows through the main path and the auxiliary path.

Deleted

According to the first aspect, heat can be stored in the heat storage means using refrigerant which is compressed by the compressor and which becomes high temperature and high pressure. Therefore, since it is possible to suppress the electricity consumed amount required for storing heat, it is possible to propose a heat-pump hot water generator having excellent energy saving performance.

It is preferable that at least one of the refrigerant circuit and the storing path is provided with flow rate adjusting means (solenoid valve) for adjusting a flow rate of refrigerant which flows through the heat storage means. A flow rate adjusting valve may be a changeover valve which switches whether refrigerant should flow through the storing path.

Moreover, the heat-pump hot water generator as defined in claim 1 further includes the plurality of operation modes, which include a first operation mode for heating the heating medium by the radiator, and a second operation mode for heating the heating medium by the heat storage means.

According to this, it is possible to execute the first operation mode (heating operation mode) for heating a heating medium by the radiator, and the second operation mode for heating a heating medium by the heat storage means . Therefore, it is possible to produce a high temperature heating medium in a state where the compressor is not operated, i.e., in a state where refrigerant is not circulating through the refrigerant circuit, and it is possible to carry out the heating operation.

According to a second aspect of the invention, the plurality of operation modes include a third operation mode for heating the heating medium by both the radiator and the heat storage means.

According to this, since it is possible to heat the heating medium by both the radiator and the heat storage means, it is possible to operate while suppressing the ability of the heat pump. Therefore, since it is possible to enhance the efficiency of the heat pump, a heat-pump hot water generator having excellent energy saving performance can be provided.

According to a third aspect of the invention, the plurality of operation modes includes a fourth operation mode for storing heat in the heat storage means by refrigerant compressed by the compressor.

According to this, it is possible to operate the heat pump and to store heat in the heat storage means efficiently.

According to a fourth aspect of the invention, a latent heat storage material is provided as the heat storage means.

Generally, as the heat storage means, there are three methods, i.e., sensible heat storage, latent heat storage and chemical heat storage. Among them, the sensible heat storage utilizes specific heat of material, and it is important that specific heat of a member whose heat is stored is large. Hence, the heat storage means becomes large in size, and efficiency of heat exchange is not so high. The chemical heat storage utilizes absorption of heat and heat generation at the time of chemical reaction. Since it is necessary to generate the chemical reaction, its control is difficult. In contrast, the latent heat storage utilizes heat of transition (latent heat) associated with change or transition in phase of material. The latent heat storage can increase the heat storage density as compared with the sensible heat storage. Since it is possible to exchange heat at temperature (constant temperature) of transition of a phase, its control is easy. In the latent heat storage, since heat is exchanged by repeating the transition of a phase of a material, the latent heat storage has excellent durability of the heat storage material and heat storage means as compared with the chemical heat storage.

Hence, if latent heat storage material is employed in the heat storage means, it is possible to efficiently store heat in the heat storage means by a refrigerating circuit, and to efficiently radiate heat from the heat storage means to the heating medium.

An embodiment of the present invention will be described with reference to the drawings. The invention is not limited to the embodiment.

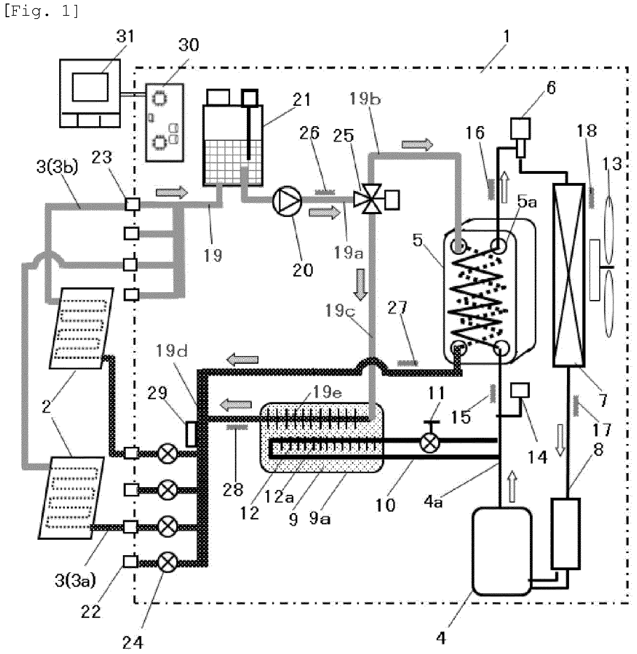

Fig. 1 is a schematic block diagram of a heat-pump hot water generator 1 having heat storage means in the embodiment.

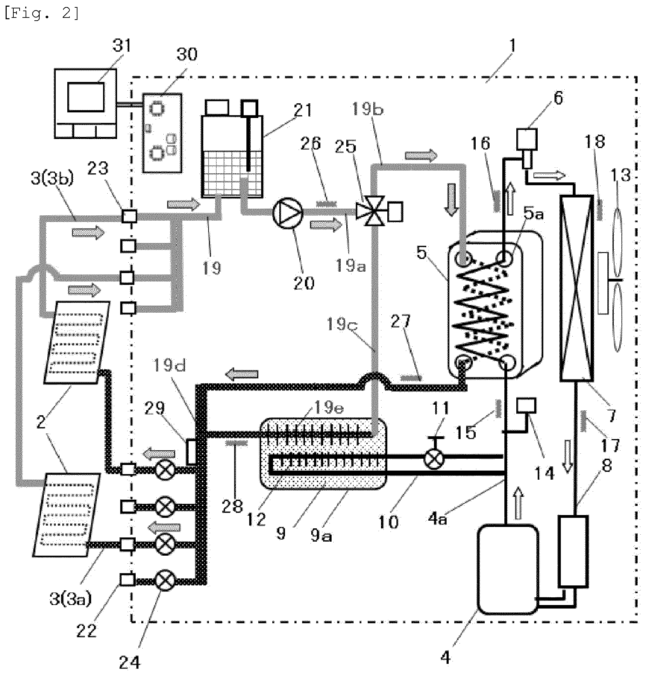

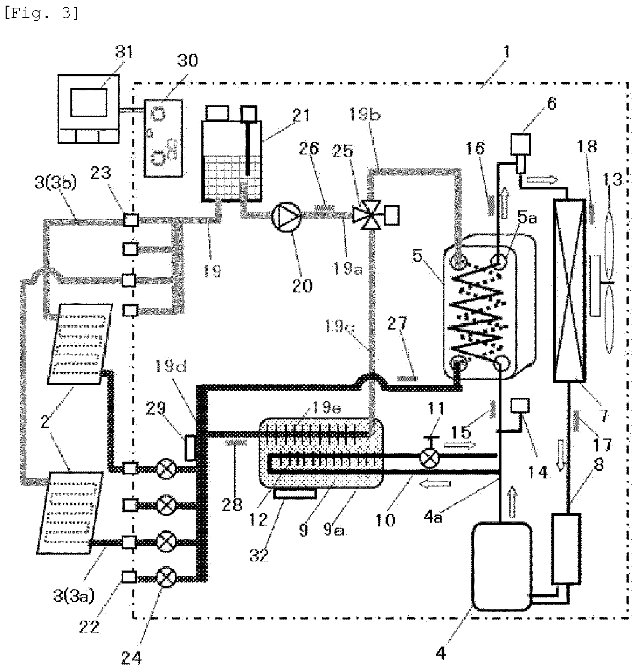

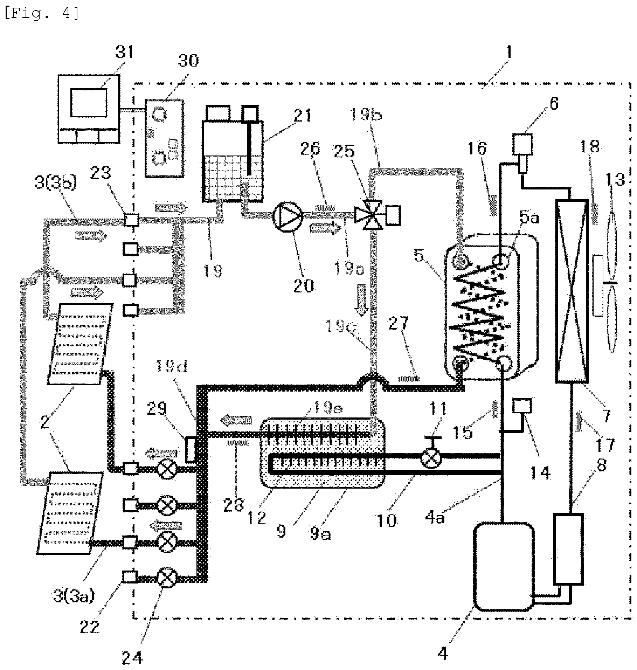

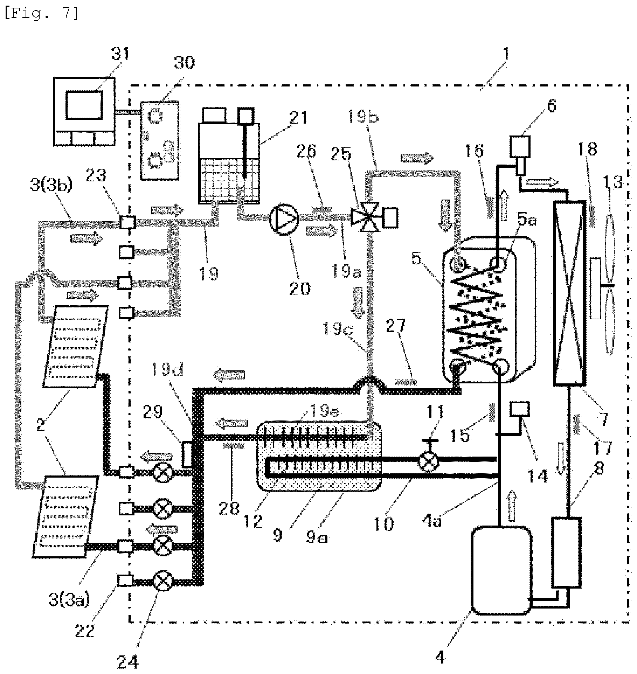

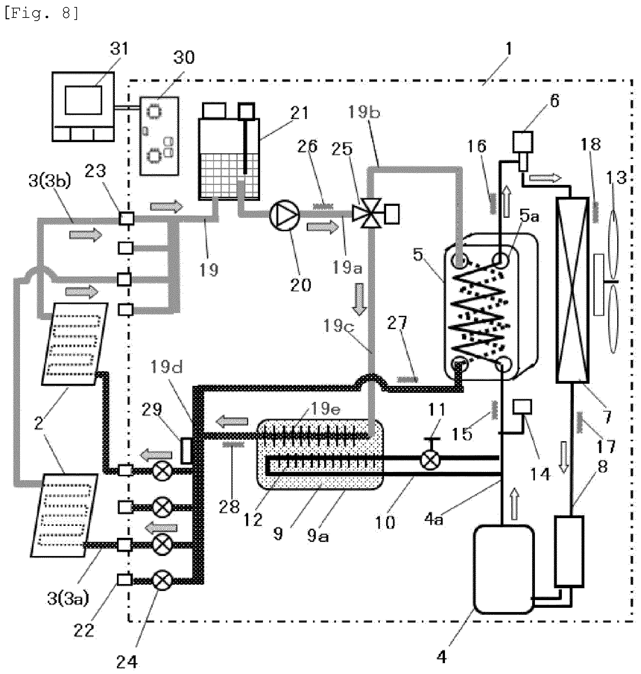

Fig. 2 shows action of a heating operation in which high temperature heating medium is produced by refrigerant which flows through a refrigerant circuit 8 of the heat-pump hot water generator 1, and the produced high temperature heating medium is supplied to external radiators 2 to heat a living-room. Fig. 3 shows action of a heat storing operation in which heat is stored in heat storage means 9 by the refrigerant which flows through the refrigerant circuit 8 of the heat-pump hot water generator 1. Fig. 4 shows action of a heat storing heating operation in which high temperature heating medium is produced by an amount of heat stored in the heat storage means 9, and the produced high temperature heating medium is supplied to the external radiators 2 to heat the living-room. Fig. 7 shows action of a concurrently using operation in which high temperature heating medium is produced by both refrigerant flowing through the refrigerant circuit 8 of the heat-pump hot water generator 1 and an amount of heat stored in the heat storage means 9, and the produced high temperature heating medium is supplied to the external radiators 2 to heat the living-room. Fig. 8 shows action of a defrosting operation of the heat-pump hot water generator 1.

First, placement and a configuration of each of parts of a heat-pump hot water generator 1 having a heat storage means 9 will be described using Fig. 1.

The heat-pump hot water generator 1 includes a refrigerant circuit 8 and a heating medium circuit 19.

The refrigerant circuit 8 is configured by annularly connecting, to one another in the named order, a compressor 4, a radiator 5, decompressing means 6 and an evaporator 7 through refrigerant pipes. The compressor 4 compresses refrigerant and discharges the same. Refrigerant circulates through the refrigerant circuit 8 by the compressor 4.

The radiator 5 exchanges heat between refrigerant flowing through the refrigerant circuit 8 and heating medium flowing through the heating medium circuit 19. It is preferable that a plate type heat exchanger is used as the radiator 5. The plate type heat exchanger is configured by laminating a plurality of stainless steel plates, and the heating medium and the refrigerant flow between the laminated plates. That is, the radiator 5 exchanges heat between heating medium such as water or antifreeze liquid and the refrigerant, and the refrigerant heats the heating medium. A capillary tube or a solenoid expansion valve can be used as the decompressing means 6. The evaporator 7 is an air-refrigerant heat exchanger, and air (outside air) and the refrigerant exchange heat.

The heating medium circuit 19 is configured by annularly connecting, to one another, the external radiator 2, the radiator 5, the heat storage means 9 and a transfer pump 20 through a heating medium pipe 3 and a heating medium path 19a. Heating medium such as water and antifreeze liquid circulates through the heating medium circuit 19 by the transfer pump 20. The heating medium path 19a includes a flow rate controller 25. At an outlet of the flow rate controller 25, the heating medium path 19a branches off into a main path 19b and an auxiliary path 19c. Downstream sides of the main path 19b and the auxiliary path 19c marge with each other at a merging portion 19d. The radiator 5 is provided in the main path 19b, and the heat storage means 9 is provided in the auxiliary path 19c. The auxiliary path 19c includes a heat absorption heat exchanger 19e. The heat absorption heat exchanger 19e is provided in the heat storage means 9.

The heating medium pipe 3 is composed of a going heating medium pipe 3a which guides heating medium from the heating medium path 19a to the external radiator 2, and a returning heating medium pipe 3b which guides heating medium from the external radiators 2 to the heating medium path 19a.

Each of the external radiators 2 is a fan convector including a panel-shaped floor heating device, a panel heater and a blast fan for example. The external radiator 2 is a heat-utilizing terminal which utilizes high temperature heating medium produced by the heat-pump hot water generator 1. A tank which stores heating medium may be connected to the heat-pump hot water generator 1 in addition to the external radiators 2.

Heating medium heated by the heat-pump hot water generator 1 passes through the going heating medium pipe 3a, and is sent to the external radiators 2, and carries out air-conditioning (heating or cooling) of the living-room in which the external radiators 2 are placed. That is, the heat-pump hot water generator 1 is a heat source of a hot water (heating medium) circulation type heating system. It is preferable that the heat-pump hot water generator 1 is placed outdoor from the relationship of an installation space.

Next, a case where the heat-pump hot water generator 1 shown in Fig. 1 is used as a heat source of a hot water circulation type heating system.

As refrigerant, it is possible to use HFC refrigerant having zero ozonosphere disruption potential such as R410A and R407C, and carbon dioxide refrigerant having zero ozonosphere disruption potential and low warming potential.

Latent heat storage material is stored in a container 9a of the heat storage means 9. A heat storing path 10 branches off from the refrigerant circuit 8 between a discharge pipe 4a of the compressor 4 and the radiator 5, and is connected to the refrigerant circuit 8 in front of the radiator 5. A portion of the heat storing path 10 is placed in the heat storage means 9. In the heat storage means 9, the heat storing path 10 is provided with a plurality of radiation fins 12a for enhancing the radiation performance, and the radiation fins 12a configure the heat storing heat exchanger 12. The heat storing path 10 is provided with a solenoid valve 11 provided downstream of the heat storage means 9. A pipe diameter of the heat storing path 10 is greater than a pipe diameter of the refrigerant circuit 8 which connects the compressor 4 and the radiator 5 to each other.

If the solenoid valve 11 is opened, high temperature refrigerant which flows into the discharge pipe 4a from the compressor 4 flows through the heat storage means 9 and flows into the radiator 5. If the solenoid valve 11 is closed, the high temperature refrigerant which flows into the discharge pipe 4a from the compressor 4 flows into the radiator 5 without flowing through the heat storage means 9.

A blast fan 13 conveys air into the evaporator 7, and facilitates the heat-exchanging ability of the evaporator 7. A pressure detector 14 is provided in the discharge pipe 4a of the compressor 4, or is provided in a refrigerant pipe extending from the discharge pipe 4a to the radiator 5. If the pressure detector 14 detects abnormal high pressure, a control device 30 stops operation of the compressor 4. A compressor output temperature sensor 15 is provided in the discharge pipe 4a of the compressor 4, or in a refrigerant pipe extending from the discharge pipe 4a to the radiator 5. A radiator refrigerant output temperature sensor 16 is provided in a refrigerant pipe extending from a refrigerant outlet 5a of the radiator 5 to the decompressing means 6. An evaporator output temperature sensor 17 is provided in a refrigerant pipe extending from the refrigerant outlet 5a of the evaporator 7 to the compressor 4. An outside air temperature sensor 18 is provided in the vicinity of the evaporator 7.

Frequency of the compressor 4 is controlled such that discharge temperature of the compressor 4 becomes optimal by temperatures detected by the compressor output temperature sensor 15, the radiator refrigerant output temperature sensor 16, the evaporator output temperature sensor 17 and the outside air temperature sensor 18, as well as temperatures detected by later-described sensors.

The transfer pump 20 forcibly circulates heating medium in the heating medium circuit 19. The transfer pump 20 is placed upstream of the radiator 5. A cistern tank 21 is placed upstream of the transfer pump 20. This cistern tank 21 is an opened tank or a hermetic tank, and absorbs an expanded amount of the heating medium of the heating medium circuit 19 which expands due to temperature rise. The heat-pump hot water generator 1 includes a going connection port 22 and a returning connection port 23 for allowing heating medium to flow through the external radiator 2. A downstream end of the heating medium path 19a is connected to the going connection port 22, and an upstream end of the heating medium path 19a is connected to the returning connection port 23. The going heating medium pipe 3a is connected to the going connection port 22, and the returning heating medium pipe 3b is connected to the returning connection port 23. Although Fig. 1 show the heat-pump hot water generator 1 provided with a plurality of going connection ports 22 and returning connection ports 23, the number of the going connection port 22 and the returning connection port 23 may be one.

A thermal valve 24 is provided in the heating medium path 19a located on an upstream side of the going connection port 22. The thermal valve 24 is opened or closed depending on whether it is necessary to heat the living-room by the external radiator 2. According to this, on and off of the heating medium to the external radiator 2 is switched, and a flow rate of the heating medium is changed.

The flow rate controller 25 is provided in the heating medium circuit 19 between the transfer pump 20 and the radiator 5. The flow rate controller 25 allows heating medium flowing through the heating medium path 19a to flow through the main path 19b or the auxiliary path 19c. The flow rate controller 25 changes a flow rate of heating medium flowing through the main path 19b or the auxiliary path 19c. That is, the flow rate controller 25 is a three-way valve in which the heating medium path 19a provided with the transfer pump 20 is used as a common flow path and a flow path can be switched between the two flows (main path 19b, auxiliary path 19c), or a mixing valve which can change a flow rate of heating medium which flows into any of the two directions. In the common flow path, heating medium flows from the heating medium path 19a provided with the transfer pump 20 into the flow rate controller 25. The heating medium sent by the transfer pump 20 can adjust, with arbitrary rate, an amount transferred to the radiator 5 by the flow rate controller 25 and an amount transferred to the heat storage means 9.

Heating medium which branches off at the flow rate controller 25 passes through the radiator 5 or the heat storage means 9 and merges at the merging portion 19d. Then, the heating medium is sent to the thermal valve 25 and is sent from the going connection port 22 to the external radiator 2.

In the heat absorption heat exchanger 19e, heat is given from refrigerant to heating medium which flows through the auxiliary path 19c. Heat stored in the heat storage means 9 is given to heating medium flowing through the auxiliary path 19c, thereby heating the heating medium.

An inlet temperature sensor 26 is provided in the heating medium path 19a located downstream of the transfer pump 20. The inlet temperature sensor 26 measures temperature of heating medium which flows into the radiator 5 or the heat storage means 9. It is preferable that the inlet temperature sensor 26 is provided between the transfer pump 20 and the flow rate controller 25. A radiator output temperature sensor 27 measures temperature of heating medium on the side of an outlet of the radiator 5. A heat storage means output temperature sensor 28 measures temperature of heating medium on the side of an outlet of the heat storage means 9. A merging portion temperature sensor 29 measures temperature of heating medium which flows downstream of the merging portion 19d of the heating medium circuit 19.

The control device 30 controls various functional parts such as the compressor 4 and the transfer pump 20 which configure the heat-pump hot water generator 1 based on signals from the temperature sensors 26 to 29. When a user instructs the heat-pump hot water generator 1 to operate, a remote control 31 sets temperature of the living-room where air conditioning is carried out by the external radiator 2. The remote control 31 may be configured such that it directly sets the temperature of the living-room, or may be configured such that the remote control 31 sets temperature of heating medium which is transferred to the external radiator 2. That is, it is only necessary that the remote control 31 has a function to directly or indirectly change the temperature of the living-room where the air conditioning is carried out by the external radiator 2.

It is only necessary that the heat-pump hot water generator 1 is provided with at least portions of the refrigerant circuit 8 and the heating medium path 19a, and with the radiator 5, the heat storage means 9 and the flow rate controller 25. That is, it is only necessary that the heat-pump hot water generator 1 is configured such that heating medium flowing through the heating medium path 19a can be heated by the radiator 5 and/or heat storage means 9.

Action of the heat-pump hot water generator 1 having the heat storage means 9 will be described using Figs. 2 to 8. First, an operation mode (first operation mode) in which heating medium is heated by the operation of the heat pump, and high temperature heating medium is produced will be described using Fig. 2.

In this embodiment, high temperature heating medium produced by the radiator 5 is made to flow into the external radiator 2, thereby carrying out the heating operation. When a tank is connected to the heating medium circuit 19, a hot water storing operation can be carried out by the first operation mode.

In the first operation mode in which high temperature heating medium is produced by the operation of the heat-pump hot water generator 1, the solenoid valve 11 is closed and in the flow rate controller 25, a flow rate of heating medium which flows from the transfer pump 20 into the radiator 5 is set such that 100% or most of (90 to 100% is preferable) heating medium flows. If the compressor 4 is operated, refrigerant which is compressed to high pressure and is discharged passes through the discharge pipe 4a. At this time, since the solenoid valve 11 is closed, refrigerant discharged from the compressor 4 flows into the radiator 5, exchanges heat with heating medium which is sent from the transfer pump 20 to the radiator 5, and radiates heat. According to this, heated heating medium becomes high temperature heating medium from low temperature heating medium.

Refrigerant which exchanges heat with heating medium and flows out from the radiator 5 is decompressed and expanded by the decompressing means 6, the refrigerant is sent to the evaporator 7, exchanges heat with air which is sent by the blast fan 13, and the refrigerant evaporates and is gasified while the refrigerant passes through the evaporator 7. This gasified refrigerant is again sucked into the compressor 4, and process in which the refrigerant is compressed is repeated. Hence, low temperature heating medium which passes through the radiator 5 is gradually heated and becomes high temperature heating medium.

Heating medium in the heating medium circuit 19 circulates through the heating medium circuit 19 by driving the transfer pump 20. Here, 90% or more heating medium which circulates through the heating medium circuit 19 by the flow rate controller 25 is sent to the radiator 5, exchanges heat, and absorbs heat. According to this, the heated heating medium becomes high temperature heating medium from the low temperature heating medium. In the radiator 5, heating medium heated by refrigerant which flows through the refrigerant circuit 8 is sent to the thermal valve 24.

The thermal valve 24 is opened and closed by the remote control 31. By opening the thermal valve 24, heating medium flows into the external radiator 2. The heating medium passes through the heating medium pipe 3 (going heating medium pipe 3a) mounted on an outer portion of the heat-pump hot water generator 1 through the going connection port 22 of the opened thermal valve 24, and the heating medium is guided into the external radiator 2. Heating medium radiates heat in the external radiator 2, thereby heating the living-room where the external radiator 2 is placed.

The heating medium which radiates heat in the external radiator 2 and which becomes low temperature passes through the heating medium pipe 3 (returning heating medium pipe 3b) and flows into the returning connection port 23. The heating medium flows through the returning connection port 23 and is sent to the cistern tank 21 from a lower surface of the cistern tank 21. Then, the heating medium is forcibly sucked into the transfer pump 20 from the lower surface of the cistern tank 21, and is forcibly sent to the radiator 5 by the transfer pump 20. The heating medium which is sent to the radiator 5 is again heated by the radiator 5, and is again guided into the external radiator 2. The above-described operation is repeated in the first operation mode. That is, by circulating through the heating medium circuit 19, the heating medium which radiates heat in the external radiator 2 heats the living-room.

Next, a heat storing operation mode (fourth operation mode) will be described using Fig. 3.

The heat storing operation mode is an operation for storing heat in the latent heat storage material charged in the container 9a of the heat storage means 9, and the heat storing operation mode is carried out by circulating refrigerant through the refrigerant circuit 8. In the heat storing operation mode, the solenoid valve 11 is opened, and the transfer pump 20 of the heating medium circuit 19 is brought into a stop state or into a state where heating medium does not flow almost at all. If the compressor 4 is operated, refrigerant which is compressed up to high pressure and discharged flows through the heat storing path 10. Since the pipe diameter of the heat storing path 10 is larger than that of the discharge pipe 4a, refrigerant more than refrigerant which flows into the radiator 5 without through the heat storing path 10 flows into the heat storing path 10.

Most of high temperature and high pressure refrigerant flows through the heat storing path 10, and is sent to the heat storage means 9 and heats the heat storage means 9. At this time, since the plurality of radiation fins 12a are provided in the heat storing heat exchanger 12 provided in the heat storing path 10, heat exchanging efficiency is enhanced. Therefore, heat exchange between refrigerant flowing through the refrigerant circuit 8 and latent heat storage material in the heat storage means 9 is carried out efficiently. The refrigerant which radiates heat in the heat storage means 9 flows into the refrigerant circuit 8 from the heat storing path 10 and then, flows into the radiator 5.

At this time, since the transfer pump 20 is brought into a stop state or a state where heating medium does not flow almost at all, heat exchange between refrigerant of the refrigerant circuit 8 and heating medium of the heating medium circuit 19, in the radiator 5, is not carried out almost at all except a heat-radiation amount in the radiator 5. Thereafter, refrigerant which flows out from the radiator 5 is decompressed and expanded by the decompressing means 6, the refrigerant is sent to the evaporator 7, exchanges heat with air which is sent by the blast fan 13, and the refrigerant evaporates and is gasified while the refrigerant passes through the evaporator 7. This gasified refrigerant is again sucked into the compressor 4, and process in which the refrigerant is compressed is repeated. Hence, latent heat storage material of the heat storage means 9 is gradually heated and becomes high temperature and temperature of the latent heat storage material is maintained in a liquid state by phase variation.

When this heat storing operation is carried out, the above-described heating operation cannot be carried out. Hence, heat radiation is not carried out by the external radiator 2 or very small heat radiation is carried out. Hence, in this heat storing operation mode, inexpensive midnight power service is used, the operation mode is carried out in the middle of the night when a user is sleeping, electricity-using fee of the user can be reduced, and the heating operation can be carried out. Depending upon a kind of refrigerant, temperature of the heat storage means 9 cannot be increased only up to 50°C also by the heat storing operation. At that time, the container 9a of the heat storage means 9 can be provided with a heater 32. BY heating the heat storage means 9 by the heater 32, it is possible to increase a heat storage amount. When the heater 32 is used also, by heating the heater 32 in the middle of the night, it is possible to reduce the used electricity rate can be reduced by carrying out the heat storing operation using midnight power service.

Next, a heat storing heating operation mode (second operation mode) will be described using Fig. 4.

In the case of the heat storing heating operation mode, the heating operation is carried out without operating the heat pump, i.e., without driving the compressor 4, and the heat storage means 9 heated in the above-described heat storing operation is used. Hence, the compressor 4 is stopped and the transfer pump 20 is driven. The flow rate controller 25 sets a flow rate of heating medium which flows from the transfer pump 20 to the heat storage means 9 such that 100% or most of (90 to 100% is preferable) heating medium flows through. In the heating medium circuit 19, by driving the transfer pump 20, the heating medium circulates through the heating medium circuit 19. Here, 90% or more heating medium which circulates through the heating medium circuit 19 by the flow rate controller 25 is sent into the heat storage means 9, the heating medium absorbs heat from the latent heat storage material, and the heating medium becomes slightly high temperature heating medium from the low temperature heating medium. At this time, the heat absorption heat exchanger 19e provided in the heat storage means 9 is provided with a fin as a heat-transfer promoting portion which increases a heat exchange amount between the latent heat storage material and the heating medium. Therefore, the heating medium can efficiently absorb heat from the heat storage means 9.

The heating medium heated by the heat storage means 9 passes through the merging portion 19d and is sent to the thermal valve 24.

The thermal valve 24 is opened and closed by the remote control 31. By opening the thermal valve 24, heating medium flows into the external radiator 2. The heating medium passes through the heating medium pipe 3 (going heating medium pipe 3a) mounted on the outer portion of the heat-pump hot water generator 1 through the going connection port 22 of the thermal valve 24, and the heating medium is guided into the external radiator 2. Heat is radiated in the external radiator 2, thereby heating the living-room where the external radiator 2 is placed.

The heating medium which radiates heat in the external radiator 2 and becomes low temperature passes through the heating medium pipe 3 (returning heating medium pipe 3b) and flows into the returning connection port 23. The heating medium passes through the returning connection port 23 and is sent from the lower surface of the cistern tank 21 into the cistern tank 21. Thereafter, the heating medium is forcibly sucked into the transfer pump 20 from the lower surface of the cistern tank 21, and is forcibly sent to the flow rate controller 25 by the transfer pump 20. Most of or all of the heating medium which is sent to the flow rate controller 25 is sent to the auxiliary path 19c provided with the heat storage means 9, the heating medium is heated by the heat storage means 9, and is again guided into the external radiator 2. The above-described operation is repeated in the second operation mode. That is, since the heating medium circulates through the heating medium circuit 19, the living-room is heated by the heating medium which radiates heat in the external radiator 2.

Here, if this mode is compared with the above-described heating operation mode, since heating medium is heated through the heat storage means 9, temperature of heating medium produced by the heat storing heating operation mode is lower than that of the heating operation mode. Hence, it is considered that the heat storing heating operation mode is used under the following condition.

In recent years, for the purpose of reducing the electricity consumed amount, there is tendency that countermeasures are taken to forcibly reduce the electricity consumed amount during a period of time when the electricity consumed amount becomes peak in that area. This is so-called demand control, and a user every second monitors the electricity consumed amount, load equipment is controlled such that the electricity consumed amount (called demand) does not exceed a contracted electricity value. Countermeasures (peak cut) to previously expect peak time zone to reduce the electricity consumed amount.

In the heat-pump hot water generator 1, most of the electricity consumed amount is an amount of electricity required for operating the compressor 4.

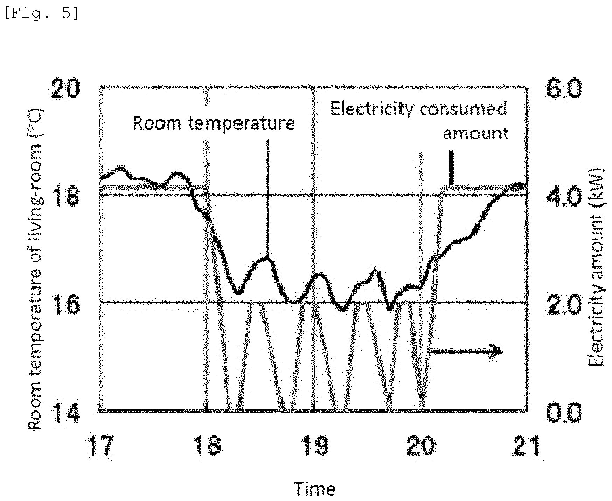

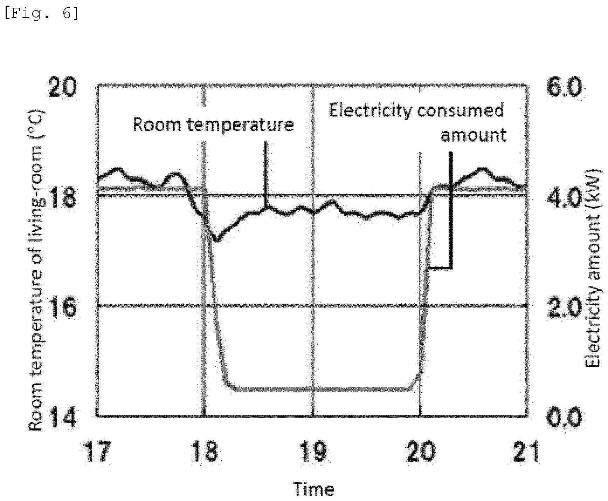

Figs. 5 and 6 shows an electricity consumed amount and a state of room temperature of the living-room of a user when an operation for reducing the electricity consumed amount is carried out at the time when the electricity consumed amount becomes peak (peak time). In Fig. 5, the electricity amount is suppressed by an intermittent operation which repeats ON and OFF of the compressor 4 of the refrigerant circuit 8. If this intermittent operation is executed, the electricity consumed amount can be reduced, but the room temperature is lowered by 2°C, and this makes a user uncomfortable in some cases. The electricity consumed amount is reduced by about half of a normal heating operation.

In contrast, Fig. 6 shows a case where the heat storing heating operation mode is carried out for cutting the peak. The heat storing heating operation mode can be executed only by driving the transfer pump 20 without operating the compressor 4. Therefore, the electricity consumed amount is lower than that of the intermittent operation, the electricity consumed amount is stable, and the average electricity consumed amount is suppressed to 1/5 or lower as compared with a normal heating operation.

Concerning the room temperature in the heat storing heating operation mode, since heating medium absorbs heat from the heat storage means 9 at the time of the heat storing heating operation mode as described above, and the heating medium whose temperature rises carries out the heating operation, the heating ability is lower, and the room temperature in the heat storing heating operation mode is slightly lower than that of the heating operation mode. As shown in Fig. 4, the room temperature is lowered by about 0.5°C by the storing heating operation mode, this does not make a user uncomfortable. On the contrary, the electricity consumed amount and the peak electricity consumed amount are largely lowered and thus, slight reduction in the room temperature can be accepted due to these effects. For example, if peak of an electricity amount is cut at certain time (e.g., 6 p.m. to 8 p.m.), the electricity consumed amount per unit time during one day is smoothened, and the electricity consumed amount and the electricity rate can be reduced. When electricity rate during certain time is varied in accordance with a total electricity consumed amount at that time, if the electricity consumed amount is suppressed while suppressing reduction of room temperature, it is possible to for a user to reduce electricity rate, and it is possible to for an electricity supply business operator to reduce an electricity amount of peak and an average electricity amount.

Next, a concurrently using mode (third operation mode) in which heating medium is heated by both the heat pump and the heat storage means 9 will be described using Fig. 7.

In the third operation mode, the solenoid valve 11 is closed. The flow rate controller 25 adjusts by a later-described temperature sensor. If the compressor 4 is operated, refrigerant which is compressed up to high pressure and is discharged passes through the discharge pipe 4a. At this time, since the solenoid valve 11 is closed, refrigerant discharged from the compressor 4 flows into the radiator 5, the refrigerant exchanges heat with heating medium which is sent from the transfer pump 20 to the radiator 5, and the refrigerant radiates heat. According to this, the heating medium becomes high temperature heating medium from low temperature heating medium.

The refrigerant which exchanges heat with heating medium and flows out from the radiator 5 is decompressed and expanded in the decompressing means 6, is sent to the evaporator 7, exchanges heat with air sent by the blast fan 13, and the refrigerant evaporates and is gasified while the refrigerant passes through the evaporator 7. This gasified refrigerant is again sucked into the compressor 4, and process in which the refrigerant is compressed is repeated. Hence, heating medium which passes through the radiator 5 is gradually heated and becomes high temperature heating medium. At this time, in the heating medium circuit 19, the valve-opening degree of the flow rate controller 25 is set to an arbitrary position, and certain amount of heating medium flows through the radiator 5 and the heat storage means 9.

Generally, if discharge temperature is increased by increasing the rotation number of the compressor 4, there is tendency that COP is lowered. Hence, in the concurrently using mode, it is preferable that the compressor 4 is also operated at the number of rotation which is most excellent for COP. In that case, however, the discharge temperature is lowered and temperature of heating medium produced by the radiator 5 is also low. Hence, the control device 30 controls the valve-opening degree of the flow rate controller 25 based on temperatures of the various portions measured by the inlet temperature sensor 26, the radiator output temperature sensor 27, the heat storage means output temperature sensor 28 and the merging portion temperature sensor 29 and temperature of heating medium detected by the merging portion temperature sensor 29 is set to temperature desired by a user. As a result, heating medium absorbs heat from the heat storage means 9 at the heating medium circuit 19 which passes through the heat storage means 9, and temperature of the heating medium increases.

Heating medium which flows through the radiator 5 and heating medium which flows through the heat storage means 9 merge with each other at the merging portion 19d, and the heating medium is sent to the thermal valve 24.

The thermal valve 24 is opened and closed by the remote control 31. By opening the thermal valve 24, heating medium flows through the external radiator 2. The heating medium passes through the heating medium pipe 3 (going heating medium pipe 3a) mounted on an outer portion of the heat-pump hot water generator 1 through the going connection port 22 of the opened thermal valve 24, and the heating medium is guided to the external radiator 2. Heat radiation is carried out in the external radiator 2, and the living-room where the external radiator 2 is placed is heated.

The heating medium which radiates heat in the external radiator 2 and becomes low temperature heating medium passes through the heating medium pipe 3 (returning heating medium pipe 3b) and flows toward the returning connection port 23. The heating medium passes through the returning connection port 23 and is sent to the cistern tank 21 from the lower surface of the cistern tank 21. Thereafter, the heating medium is forcibly sucked into the transfer pump 20 from the lower surface of the cistern tank 21, and is forcibly sent to the radiator 5 and the heat storage means 9 by the transfer pump 20. The heating medium is heated by the radiator 5 and the heat storage means 9 and is again guided to the external radiator 2. The above-described operation is repeated in the third operation mode. That is, by circulating the heating medium through the heating medium circuit 19, the living-room is heated by the heating medium which radiates heat in the external radiator 2.

At this time, as described above, the compressor 4 is carried out an efficient operation in which although the discharge temperature is low, COP is high, and the operation capable of realizing desired comfort for a user can be carried out while reducing the electricity consumed amount by assisting using the heat storage means 9.

If the heat storing amount of the heat storage means 9 is reduced, temperature of heating medium cannot sufficiently be increased even if the concurrently using mode is carried out. Therefore, it is necessary to previously store heat in the heat storage means 9.

Next, a defrosting operation mode (fifth operation mode) will be described using Fig. 8.

If frost is formed on the evaporator 7 when outside air temperature is low, an amount of air which flows through the evaporator 7 is reduced and ability of the evaporator 7 is lowered. Therefore, temperature of the heating medium cannot rise up to predetermine temperature. Hence, it is necessary to defrost. Conventionally, the transfer pump 20 is stopped, the decompressing means 6 is fully opened, high temperature and high pressure refrigerant from the compressor 4 is made to flow through the evaporator 7, thereby carrying out the defrosting operation. At this time, if the transfer pump 20 is driven, heat exchange is carried out in the radiator 5 and a heat amount which is necessary for the defrosting operation is reduced. Hence, the control device 30 stops the transfer pump 20. Hence, since the heating medium does not circulate through the heating medium circuit 19, high temperature heating medium does not flow through the external radiator 2, temperature in the living-room is lowered and comfort of a user is deteriorated. On the other hand, if the above-described heat storing heating operation mode and the defrosting operation mode are concurrently used, it is possible to defrost while maintaining the comfort.

Concerning the heating medium circuit 19, the transfer pump 20 is driven as in the heat storing heating operation mode. According to this, heating medium circulates through the heating medium circuit 19. The flow rate controller 25 sets such that 100% or most (90 to 100% is preferable) of a flow rate of heating medium which flows into the flow rate controller 25 from the transfer pump 20 flows through the auxiliary path 19c provided with the heat storage means 9.

Heating medium which is sent to the heat storage means 9 absorbs heat from the latent heat storage material, and the heating medium becomes slightly high temperature heating medium from low temperature heating medium. The heat absorption heat exchanger 19e provided in the heat storage means 9 is provided with a fin as a heat-transfer promoting portion. Therefore, heat absorbing efficiency is enhanced.

The heating medium heated by the heat storage means 9 passes through the merging portion 19d and is sent to the thermal valve 24.

The thermal valve 24 is opened and closed by the remote control 31. If the thermal valve 24 is opened, heating medium flows into the external radiator 2. The heating medium passes through the heating medium pipe 3 (going heating medium pipe 3a) mounted on an outer portion of the heat-pump hot water generator 1 through the going connection port 22 of the thermal valve 24, and the heating medium is guided to the external radiator 2. Heat radiation is carried out in the external radiator 2, and the living-room where the external radiator 2 is placed is heated.

Heating medium which radiates heat in the external radiator 2 and temperature thereof becomes low passes through the heating medium pipe 3 (returning heating medium pipe 3b) and flows toward the returning connection port 23. The heating medium passes through the returning connection port 23, and is sent to the cistern tank 21 from the lower surface of the cistern tank 21. Thereafter, the heating medium is forcibly sucked into the transfer pump 20 from the lower surface of the cistern tank 21, and forcibly passes through the flow rate controller 25 by the transfer pump 20. Most of heating medium is sent to the heat storage means 9 by the flow rate controller 25, the heating medium whose temperature becomes low is heated by the radiator 5, and is again guided to the external radiator 2. The above-described operation is repeated in the fifth operation mode. That is, since the heating medium circulates the heating medium circuit 19, the living-room is heated by the heating medium which radiates heat in the external radiator 2.

At that time, concerning the refrigerant circuit 8, the solenoid valve 11 is closed, and high temperature and high pressure refrigerant is transferred to the radiator 5 from the compressor 4. Since the heating medium does not flow into the radiator 5 from the heating medium circuit 19, temperature reduction of refrigerant in the radiator 5 can be suppressed. Further, the decompressing means 6 is fully opened, the high temperature and high pressure refrigerant from the compressor 4 is made to flow into the evaporator 7, and the defrosting operation can be carried out while carrying out the heat storing heating operation mode. At this time, temperature in the living-room where the external radiator 2 is located slightly lowered as shown in Fig. 6, but this does not largely deteriorate the comfort.

According to this, at the time of the defrosting operation mode, heating medium is made to flow through the heating medium circuit 19 while carrying out the defrosting operation, and the heating operation mode can be carried out. However, at this time also, if the heat storing amount of the heat storage means 9 is reduced, the defrosting operation cannot sufficiently be carried out. Hence, it is necessary to previously store heat in the heat storage means 9.

The heat storage means 9 is composed of latent heat storage material. The heat storage means can roughly be divided into three, i.e., the sensible heat storage, the latent heat storage and the chemical heat storage. Among them, the sensible heat storage utilizes specific heat of material, and it is important that specific heat is large. Hence, the heat storage means becomes large in size, and efficiency of heat exchange is not so high as compared with the other two heat storage methods. The chemical heat storage utilizes absorption of heat and heat generation at the time of chemical reaction. Since it is necessary to generate the chemical reaction, its device becomes complicated, requirements with respect to durability increase and thus, costs of the heat storage device increase. In contrast, the latent heat storage utilizes heat of transition (latent heat) associated with change or transition in phase of material. The latent heat storage has higher heat storage density as compared with the sensible heat storage, and heat can be supplied at temperature (constant temperature) of transition of a phase. In the latent heat storage, since transition of a phase of a stable, safety and inexpensive material is merely repeated, the operation is easy, and durability thereof is also excellent.

As described above, according to the heat-pump hot water generator 1 having the heat storage means of the present invention, in the first operation mode, the transfer pump 20 of the heating medium circuit 19 is driven and in the refrigerant circuit 8, high temperature refrigerant and heating medium exchange heat in the radiator 5 through which the high temperature refrigerant flows, temperature of the heating medium rises, the heating medium is transferred to the external radiator 2 by the going connection port 22, and the heating operation can be carried out. In the heat storing heating operation mode, the transfer pump 20 is driven, temperature of the heating medium is increased in the heat storage means 9, the heating medium is transferred to the external radiator 2 by the going connection port 22, and the heating operation can be carried out. The flow rate controller 25 (mixing valve) adjusts a flow rate of heating medium which passes through the heat storage means 9 and a flow rate of the heating medium which flows through the radiator 5, and both the heating medium is mixed. According to this, the concurrently using operation for producing hot water having desired temperature can be carried out. Therefore, it is possible to satisfy high energy saving performing while enhancing comfort of a user.

By the heat storing heating operation mode, it is possible to carry out the heating operation in a state where refrigerant does not circulates through the refrigerant circuit 8 without operating the compressor 4, and energy saving performing and low noise performance can be enhanced.

In addition, also when frost is formed on an air-refrigerant heat exchanger 7, it is necessary to defrost the heat exchanger 7. At this time, an amount of heating medium which flows through the radiator 5 is reduced or is made 0 by the flow rate controller 25, and high temperature and high pressure refrigerant discharged from the compressor 4 can be made to flow into the evaporator 7 while keeping the high temperature without exchanging heat by the radiator 5. According to this, high temperature heating medium can be sent to the external radiator 2 while carrying out the defrosting operation and the heating operation can be carried out, and comfort can be enhanced.

Further, when heat is stored in the heat storage means 9, high temperature and high pressure refrigerant first flows through the heat storage means 9 from the compressor 4, and the heat storing operation can be carried out. Therefore, heat can be stored in the heat storage means 9 efficiently. Hence, electricity input required for storing heat can be reduced, and energy saving performing can be enhanced.

### [INDUSTRIAL APPLICABILITY]

As described above, the heat-pump hot water generator of the present invention have excellent comfort and energy saving performing. Therefore, this heat-pump hot water generator can be used for a hot water circulating type heating system and a heat pump water heater.

### [EXPLANATION OF SYMBOLS]

- 1: heat-pump hot water generator
- 2: external radiator
- 3: heating medium pipe
- 3a: going heating medium pipe
- 3b: returning heating medium pipe
- 4: compressor
- 4a: discharge pipe
- 5: radiator
- 6: decompressing means (expansion valve)
- 7: evaporator (air-refrigerant heat exchanger)
- 8: refrigerant circuit
- 9: heat storage means
- 9a: container
- 10: heat storing path
- 11: solenoid valve
- 12: heat storing heat exchanger
- 12a: radiation fins
- 13: blast fan
- 14: pressure detector
- 15: compressor output temperature sensor
- 16: radiator refrigerant output temperature sensor
- 17: evaporator output temperature sensor
- 18: outside air temperature sensor
- 19: heating medium circuit
- 19a: heating medium path
- 19b: main path
- 19c: auxiliary path
- 19d: merging portion
- 19e: heat absorption heat exchanger
- 20: transfer pump
- 21: cistern tank
- 22: going connection port
- 23: returning connection port
- 24: thermal valve
- 25: flow rate controller
- 26: inlet temperature sensor
- 27: radiator heating medium output temperature sensor
- 28: heat storage means output temperature sensor
- 29: merging portion temperature sensor
- 30: control device
- 31: remote control

## Claims

1. A heat-pump hot water generator (1), comprising:
a refrigerant circuit (8) formed by annularly connecting, to one another, a compressor (4), a radiator (5) in which refrigerant and heating medium exchange heat, decompressing means (6) and an evaporator (7) through a refrigerant pipe;
a control means (30) configured to execute a plurality of operation modes; and
a heating medium path (19a) through which the heating medium flows,
wherein a main path (19b) having the radiator (5) and an auxiliary path (19c) having heat storage means (9) which exchanges heat with the heating medium are provided in the heating medium path (19a) in parallel,
**characterized in that** the heat-pump hot water generator (1) further comprises:
a heat storing path (10) which branches off from the refrigerant circuit (8) placed in a discharge side of the compressor (4), and which is connected to the refrigerant circuit (8) through the heat storage means (9),
a solenoid valve (11) arranged to stop flow of the refrigerant to the heat storing path (10), and arranged such that
if the solenoid valve (11) is opened, the refrigerant which is discharged from the compressor (4) flows through the heat storage means (9) into the radiator (5) and if the solenoid valve (11) is closed, the refrigerant which is discharged from the compressor (4) flows into the radiator (5) without flowing through the heat storage means (9),
wherein the plurality of operation modes executed by the control means (30) includes
a first operation mode configured for heating the heating medium by the radiator (5),
a second operation mode configured for heating the heating medium by the heat storage means (9), and
a defrosting operation mode, wherein, in the defrosting operation mode, the heating medium is heated by the heat storage means (9) according to the second operation mode, and the flow of the refrigerant to the heat storing path (10) is stopped by the solenoid valve (11), whereby high temperature and high pressure refrigerant from the compressor (4) is made to flow through the evaporator (7).

2. The heat-pump hot water generator (1) according to claim 1, wherein the plurality of operation modes include a third operation mode configured for heating the heating medium by both the radiator (5) and the heat storage means (9).

3. The heat-pump hot water generator (1) according to claim 1 or 2, wherein the plurality of operation modes include a fourth operation mode configured for storing heat in the heat storage means (9) by refrigerant compressed by the compressor (4).

4. The heat-pump hot water generator (1) according to any one of claims 1 to 3, where a latent heat storage material is provided as the heat storage means (9).

## Patentansprüche

1. Heißwassererzeuger mit Wärmepumpe (1), enthaltend:
einen Kältemittelkreislauf (8), der durch ringförmiges Miteinanderverbinden eines Kompressors (4), eines Radiators (5), in dem ein Kältemittel und ein Heizmedium Wärme austauschen, einer Dekompressionsvorrichtung (6) und eines Verdampfers (7) durch eine Kältemittelleitung ausgebildet ist;
eine Steuervorrichtung (30), die dazu eingerichtet ist, eine Vielzahl von Betriebsarten auszuführen; und
einen Heizmediumpfad (19a), durch den das Heizmedium fließt,
wobei ein Hauptpfad (19b) mit dem Radiator (5) und ein Hilfspfad (19c) mit einem Wärmespeichermittel (9), das Wärme mit dem Heizmedium austauscht, in dem Heizmediumpfad (19a) parallelgeschaltet vorgesehen sind,
**dadurch gekennzeichnet, dass** der Heißwassererzeuger mit Wärmepumpe (1) ferner umfasst:
einen Wärmespeicherpfad (10), der von dem auf einer Auslassseite des Kompressors (4) gelegenen Kältemittelkreislauf (8) abzweigt und der durch das Wärmespeichermittel (9) mit dem Kältemittelkreislauf (8) verbunden ist,
ein Magnetventil (11), das dazu gestaltet ist, den Fluss des Kältemittels zum Wärmespeicherpfad (10) zu unterbrechen, und das derart gestaltet ist, dass,
wenn das Magnetventil (11) geöffnet ist, das von dem Kompressor (4) abgegebene Kältemittel durch das Wärmespeichermittel (9) in den Radiator (5) fließt, und wenn das Magnetventil (11) geschlossen ist, das von dem Kompressor (4) abgegebene Kältemittel in den Radiator (5) fließt, ohne durch das Wärmespeichermittel (9) zu fließen,
wobei die Vielzahl der von der Steuervorrichtung (30) ausgeführten Betriebsarten umfasst
eine erste Betriebsart, die zum Erwärmen des Heizmediums durch den Radiator (5) eingerichtet ist,
eine zweite Betriebsart, die zum Erwärmen des Heizmediums durch das Wärmespeichermittel (9) eingerichtet ist, und
eine Entfrostungsbetriebsart, wobei das Heizmedium in der Entfrostungsbetriebsart von dem Wärmespeichermittel (9) gemäß der zweiten Betriebsart erwärmt wird und der Fluss des Kältemittels zu dem Wärmespeicherpfad (10) durch das Magnetventil (11) unterbrochen wird, wobei Kältemittel mit hoher Temperatur und hohem Druck von dem Kompressor (4) durch den Verdampfer (7) fließen gelassen wird.

2. Heißwassererzeuger mit Wärmepumpe (1) nach Anspruch 1, wobei die Vielzahl von Betriebsarten eine dritte Betriebsart umfasst, die zum Erwärmen des Heizmediums sowohl durch den Radiator (5) als auch das Wärmespeichermittel (9) eingerichtet ist.

3. Heißwassererzeuger mit Wärmepumpe (1) nach Anspruch 1 oder 2, wobei die Vielzahl von Betriebsarten eine vierte Betriebsart umfasst, die zum Speichern von Wärme in dem Wärmespeichermittel (9) durch von dem Kompressor (4) verdichtetes Kältemittel eingerichtet ist.

4. Heißwassererzeuger mit Wärmepumpe (1) nach einem der Ansprüche 1 bis 3, wobei ein Latentwärmespeichermaterial als das Wärmespeichermittel (9) vorgesehen ist.

## Revendications

1. Générateur d'eau chaude à pompe à chaleur (1), comprenant :
un circuit de réfrigérant (8) formé par raccordement annulaire, les uns aux autres, d'un compresseur (4), d'un radiateur (5), dans lequel le réfrigérant et le milieu chauffant échangent de la chaleur, d'un moyen de décompression (6) et d'un évaporateur (7) par l'intermédiaire d'un tuyau à réfrigérant ;
un moyen de commande (30) conçu pour exécuter une pluralité de modes de fonctionnement ; et
un trajet de milieu chauffant (19a) à travers lequel s'écoule le milieu chauffant,
un trajet principal (19b) présentant le radiateur (5) et un trajet auxiliaire (19c) présentant un moyen de stockage de chaleur (9) qui échange de la chaleur avec le milieu chauffant étant disposés dans le trajet de milieu chauffant (19a) en parallèle,
**caractérisé en ce que** le générateur d'eau chaude à pompe à chaleur (1) comprend en outre :
un trajet de stockage de chaleur (10) qui se ramifie à partir du circuit de réfrigérant (8) placé dans un côté refoulement du compresseur (4) et qui est relié au circuit de réfrigérant (8) par l'intermédiaire du moyen de stockage de chaleur (9),
une électrovanne (11) agencée pour arrêter l'écoulement du réfrigérant vers le trajet de stockage de chaleur (10) et agencée de telle sorte que,
si l'électrovanne (11) est ouverte, le réfrigérant qui est évacué du compresseur (4) s'écoule à travers le moyen de stockage de chaleur (9) dans le radiateur (5), et si l'électrovanne (11) est fermée, le réfrigérant qui est évacué du compresseur (4) s'écoule dans le radiateur (5) sans s'écouler à travers le moyen de stockage de chaleur (9),
dans lequel la pluralité de modes de fonctionnement exécutés par le moyen de commande (30) comprennent
un premier mode de fonctionnement conçu pour chauffer le milieu de chauffage par le radiateur (5),
un deuxième mode de fonctionnement conçu pour chauffer le milieu de chauffage par le moyen de stockage de chaleur (9) et
un mode de fonctionnement de dégivrage, dans lequel, dans le mode de fonctionnement de dégivrage, le milieu de chauffage est chauffé par le moyen de stockage de chaleur (9) selon le deuxième mode de fonctionnement et l'écoulement du réfrigérant vers le trajet de stockage de chaleur (10) est arrêté par l'électrovanne (11), un réfrigérant à température élevée et à pression élevée provenant du compresseur (4) étant amené à s'écouler à travers l'évaporateur (7).

2. Générateur d'eau chaude à pompe à chaleur (1) selon la revendication 1, dans lequel la pluralité de modes de fonctionnement comprennent un troisième mode de fonctionnement conçu pour chauffer le milieu chauffant à la fois par le radiateur (5) et par le moyen de stockage de chaleur (9).

3. Générateur d'eau chaude à pompe à chaleur (1) selon la revendication 1 ou 2, dans lequel la pluralité de modes de fonctionnement comprennent un quatrième mode de fonctionnement conçu pour stocker de la chaleur dans le moyen de stockage de chaleur (9) par le réfrigérant comprimé par le compresseur (4).

4. Générateur d'eau chaude à pompe à chaleur (1) selon l'une quelconque des revendications 1 à 3, dans lequel un matériau de stockage de chaleur latente est prévu en tant que moyen de stockage de chaleur (9).
